Europäisches Patentamt

European Patent Office

Office européen des brevets

(11) Numéro de publication: **0 004 505**
**B1**

(12) **FASCICULE DE BREVET EUROPEEN**

(45) Date de publication du fascicule du brevet: **20.01.82**

(21) Numéro de dépôt: **79400173.5**

(22) Date de dépôt: **16.03.79**

(51) Int. Cl.³: **G 01 B 9/08,** G 01 N 21/31,
G 01 B 11/02,
H 05 K 13/08, G 01 J 1/12
//G03B41/00

(54) Appareil de contrôle d'un dessin inscrit sur un support plan.

(30) Priorité: **24.03.78 FR 7808672**

(43) Date de publication de la demande:
**03.10.79 Bulletin 79/20**

(45) Mention de la délivrance du brevet:
**20.01.82 Bulletin 82/3**

(84) Etats contractants désignés:
**DE GB NL**

(56) Documents cités:
**CH - A - 584 493**
**FR - A - 2 095 523**
**FR - A - 2 218 599**
**FR - A - 2 321 229**

(73) Titulaire: **THOMSON-CSF**
**173, Boulevard Haussmann**
**F-75360 Paris Cedex 08 (FR)**

(72) Inventeur: **Lacombat, Michel**
**"THOMSON-CSF" - SCPI 173, bld Haussmann**
**F-75360 Paris Cedex 08 (FR)**
Inventeur: **Desperques-Volmier, Serge**
**"THOMSON-CSF" - SCPI 173, bld Haussmann**
**F-75360 Paris Cedex 08 (FR)**

(74) Mandataire: **Lepercque, Jean et al,**
**"THOMSON-CSF" - SCPI 173, Bld. Haussmann**
**F-75360 Paris Cedex 08 (FR)**

Courier Press, Leamington Spa, England.

Appareil de contrôle d'un dessin inscrit sur un support plan.

L'invention se rapporte au contrôle en microlithographie adaptée à la réalisation de circuits à très haute densité d'intégration. La réalisation de ces circuits passe par plusieurs étapes qui diffèrent selon les méthodes. En photolithographie, des machines à dessiner optiques ou électroniques produisent des échantillons portant un motif unique, généralement à l'échelle 10, que nous appellerons réticule. Puis, un photo-répéteur produit un masque portant une nappe régulière de motifs identiques régulièrement disposés reproduisant à l'échelle 1 le motif du réticule sous la forme de zones opaques et de zones transparentes. Ce masque permet d'insoler sélectivement certaines parties d'un substrat semi-conducteur recouvert d'une résine photosensible. Une variante de cette méthode, appelée photorépétition directe, permet de reporter le motif directement du réticule au substrat recouvert de photorésist, sans utiliser de masque intermédiaire. L'invention s'applique particulièrement à la détection des défauts du réticule et de ceux du masque. Elle permet de faire une analyse rapide avec une résolution inférieure au $\mu$m. La position du défaut n'as pas besoin d'être parfaitement définie. Il suffit que, par la suite, un opérateur puisse localiser le défaut dans le champ de son microscope, en vue de la réparation.

Les réticules peuvent présenter les défauts suivants:

— erreurs de positionnement des éléments de motifs des repères d'alignement;

— éléments de motif manquants ou en trop;

— distorsion de la forme du motif ou dimensions incorrectes;

— erreurs de conception et de manipulation;

— défauts de traitement (trous, gravure excessive ou insuffisante, irrégularité).

Les masques à l'échelle 1 obtenus à partir d'un réticule en principe sans défaut peuvent à nouveau comporter des défauts du même genre. Des défauts supplémentaires peuvent s'y ajouter, notamment sur le positionnement de l'image, rotation de l'image, grandissement, distorsion, etc.

Des études montrent que le taux d'erreur et le manque de rapidité d'un contrôle par observation visuelle avec des microscopes, par exemple, deviennent prohibitifs pour des circuits à haute intégration.

Il existe des techniques de balayage de masque par un faisceau quasi-ponctuel d'électrons ou de photons mais elles conduisent à une masse de données importante difficile à exploiter.

Il est par ailleurs connu d'utiliser deux dispositifs de balayage en X, Y pour analyser points à points à l'aide de deux faisceaux d'analyse, respectivement un motif à contrôler et un motif formant référence. Les deux motifs sont divisés en bandes elles-mêmes divisées en zones élémentaires constituées de carrés. Le niveau d'éclairement d'une zone élémentaire du motif à contrôler est comparé à celui de la zone correspondante du motif formant référence de manière à localiser les erreurs éventuelles sur le dessin du motif à contrôler.

La demande de brevet FR - A - 2 321 229 décrit un procédé et un appareillage pour le contrôle de graphisme des circuits imprimés mettant en oeuvre une telle disposition, appareillage du type décrit dans le préambule de la revendication 1 de la présente demande de brevet européen. Pour effectuer la comparaison, chaque dispositif comporte une caméra à photodiodes associé à une logique à seuil; les signaux électriques élabores par les deux dispositifs étant transmis à un organe de comparaison.

Cependant cette demande de brevet français enseigne une méthode ne permettant uniquement que de localiser ces défauts.

Dans le cadre de l'application plus particulièrement visé par l'invention, il est possible de tolérer des défauts d'alignement qui se traduisent par des décalages d'amplitude et de sens déterminé suivant au moins un des axes d'un dièdre de référence X, Y. Il est important de pouvoir différencier des défauts dûs à des erreurs vraies de simples décalages. L'appareillage décrit dans la demande de brevet français précitée interprète toute différence entre deux zones élémentaires homologues des deux motifs comme une erreur.

Il s'agit donc d'une simple comparaison point à point même si une ligne point est "enregistrée" sur une barette de détecteurs en vue d'une comparaison ultérieure.

La présente invention propose un appareillage de contrôle d'un dessin inscrit sur un support plan comprenant des dispositifs permettant de déterminer d'éventuels décalages entre le dessin et le motif selon deux directions X et Y et de mettre en évidence d'éventuelles erreurs d'inscription dans le dessin irréductible à un décalage.

La méthode spécifique de balayage retenue dans la demande de brevet français précitée et qui est illustrée plus particulièrement par référence aux figures 5a ou 5b, ne permettrait d'ailleurs pas d'associer à l'appareillage décrit, les circuits logiques enseignés par la présente invention dans ce qui suit pour la mise en oeuvre des dispositifs de détermination de décalage.

D'autre part, il est particulièrement intéressant de pouvoir contrôler le réticule ainsi que le masque sur lequel le réticule a été reproduit avec le même appareil.

L'invention vise à combler les besoins précités tout en mettant en oeuvre un procédé d'analyse fournissant une quantité de données optimisée, ce pour pallier les inconvénients de l'art connu.

L'invention a donc pour objet un appareil de contrôle d'un dessin inscrit sur un support plan présentant deux niveaux de modulation pour un faisceau d'analyse, par rapport à un motif de référence, le dessin et le motif étant décomposables en zones élémentaires formant dans une direction Y des lignes se succédant dans une direction X, perpendiculaire à Y du type comportant:

— un dispositif d'analyse du dessin, ce dispositif comprenant des moyens de projection du faisceau d'analyse permettant d'éclairer sur le support N zones élémentaires successives d'une même ligne, des moyens formant l'image des N zones élémentaires sur un plan avec un grandissement G et un détecteur à N cellules détectrices alignées situé dans le plan image, chaque cellule étant conjuguée optiquement avec l'une des zones élémentaires éclairées par le faisceau d'analyse par rapport aux moyens imageurs, ledit détecteur délivrant des signaux S relatifs au niveau de modulation des zones élémentaires éclairées;

— des moyens de déplacement relatif du support par rapport au dispositif d'analyse, selon les deux directions X et Y, de façon à effectuer l'analyse ligne par ligne, par bandes de N zones élémentaires;

— des moyens fournissant des signaux Σ relatifs au motif de référence décrit ligne par ligne, par bandes de N élémentaires;

— deux dispositifs de traitement respectivement des signaux S et Σ;

appareil principalement caractérisé en ce que, lesdites zones élémentaires étant constituées de rectangles, les deux dispositifs fournissent simultanément des signaux sélectionnés relatifs à deux points homologues du dessin à contrôler et du motif de référence et des signaux relatifs à des points voisins présentant respectivement un décalage d'au moins un rectangle dans une même ligne et un décalage d'au moins une ligne dans la direction Y; et en ce qu'il comprend un dispositif de comparaison des signaux ainsi sélectionnés fournis par les deux dispositifs de traitement, permettant de déterminer d'éventuels décalages entre le dessin et le motif selon les deux directions X et Y et de mettre en évidence d'éventuelles erreurs d'inscription dans le dessin irréductible à un décalage.

L'invention sera mieux comprise à l'aide de la description ci-après et des dessins qui s'y rapportent parmi lesquels:

— la figure 1 représente un dispositif optique de contrôle d'un échantillon;

— les figures 2 et 3 expliquent le mode d'analyse;

— la figure 4 est un bloc diagramme du système de contrôle complet;

— la figure 5 représente un système d'enregistrement-lecture des données concernant le motif à contrôler;

— la figure 6 représente un système d'enregistrement-lecture des données concernant le motif de référence;

— les figures 7 et 8 précisent la figure 6;

— la figure 9 représente un dispositif de sélection des signaux à examiner pour le motif à contrôler;

— la figure 10 représente un dispositif de sélection des signaux à examiner concernant le motif de référence;

— la figure 11 représente un dispositif de comparaison des signaux sélectionnés pour les deux motifs;

— les figures 12 à 15 illustrent des exemples de différences entre les deux motifs.

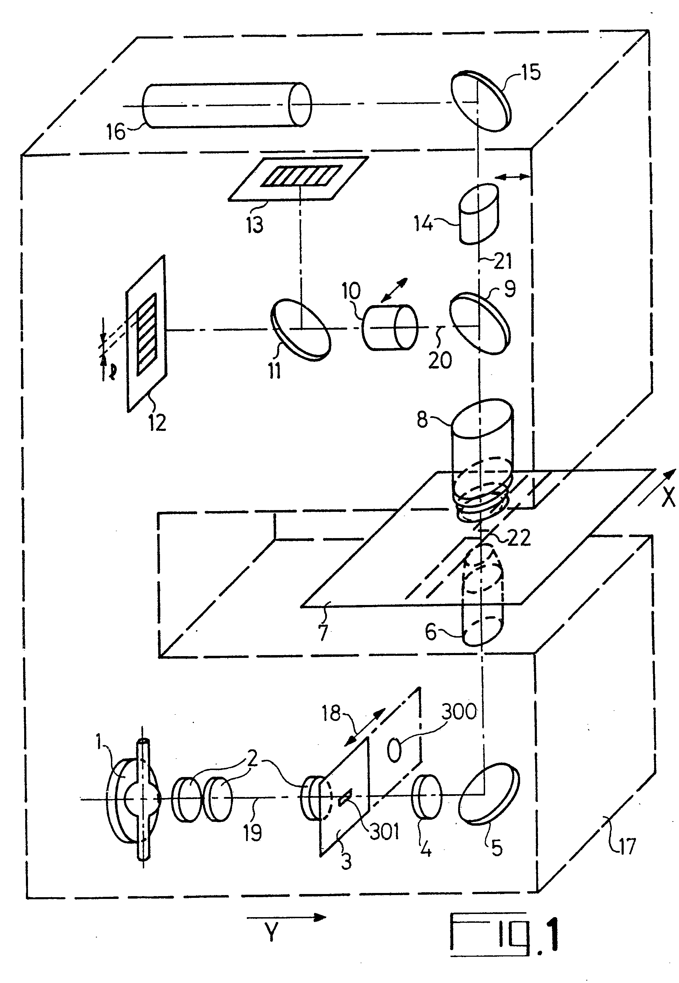

La figure 1 représente schématiquement un dispositif optique d'analyse d'un échantillon 7 comportant des zones d'opacité et des zones de transparence, ce qui forme un motif unique, ou bien un grand nombre de motifs disposés régulièrement en lignes et en colonnes. L'échantillon est placé sur une table interférométrique du type de celle d'un photo-répéteur, non représentée sur la figure. Il est éclairé par un faisceau lumineux, dont seul l'axe 19 est visible sur la figure. Tous les éléments du dispositif optique sont solidaires et disposés dans un bâti mécanique 17. Le dispositif comprend une source lumineuse 1, par exemple une lampe à mercure. Le faisceau émis par la source 1 traverse un ensemble de lentilles 2 et est mis en forme par l'un des deux diaphragmes 300 et 301 portés par un volet 3. Le diaphragme 300 est un orifice circulaire et est utilisé pour l'observation visuelle. Le diaphragme 301 est une fente dont les dimensions permettent de recouvrir la surface que l'on désire éclairer sur l'échantillon en vue de la détection. Le volet est déplaçable perpendiculairement à l'axe 19, selon la flèche 18, afin de permettre la sélection du diaphragme voulu. Derrière le volet 3 sont disposés sur le trajet du faisceau lumineux une lentille 4, un miroir 5 renvoyant la lumière en direction de l'échantillon 7 par l'intermédiaire d'un condenseur 6, permettant d'éclairer une zone rectangulaire 22 de l'échantillon 7. Selon l'état de transparence de la zone 22, la lumière est absorbée, ou bien transmise par l'échantillon 7 en direction d'un objectif 8 de grandisse-ment $G_8$ et ayant une bonne ouverture numérique, afin que le profil des images soit le plus abrupt possible, ce qui améliore la résolution. La mise au point de l'objectif 8 est assurée, selon un procédé connu dans le domaine de la photorépétition, par un senseur pneumatique, non représenté sur la figure. Le faisceau lumineux est ensuite partagé par une lame semi-réfléchissante en deux faisceaux. Le faisceau réfléchi, d'axe 20, passe par un objectif 10 de grandissement réglable $G_{10}$, qui forme l'image de la zone 22 sur un détecteur en ligne 12 comportant N cellules détectrices ayant chacune une largeur élémentaire $1$. Le détecteur 12 est de préférence de type CCD, c'est-à-dire un dispositif à transfert de charges en forme de registre à décalage. Il doit permettre la détection simultanée de toute la zone 22 et la sortie des informations élémentaires en série, grâce à l'effet de décalage pas à pas. Le faisceau transmis par la lame 9, d'axe 21, passe par un objectif 14 de grandissement réglable $G_{14}$ et est renvoyé par un miroir 15 vers un dispositif d'observation visuelle 16, par exemple un tube vidicon, ce qui permet d'examiner sur un écran la zone de l'échantillon éclairée grâce au diaphragme 300. Pour l'application du dispositif optique à l'analyse d'un masque ou d'un réticule, on a déterminé les exigences suivantes: la résolution est de 0,6 $\mu$m pour les masques et de 1,25 $\mu$m pour les réticules, la zone 22 a une longueur D au moins égale à 1000 fois la résolution (D=0,6 mm ou D=1,25 mm). On utilise donc un détecteur constitué d'une barrette de 1000 cellules détectrices, chaque cellule étant associée à un point élémentaire de la zone 22. Les senseurs CCD ayant une largeur minimale d'environ 13 $\mu$m, on choisit comme valeurs de gain $G_8 = 20$, $G_{10} = 1$ pour l'analyse d'un réticule, $G_{10} = 0,5$ pour l'analyse d'un masque et $G_{14}$ de l'ordre de 20 pour l'observation visuelle. L'objectif 8 a une ouverture numérique de 0,6 et le condenseur 6 a une ouverture de 0,9. Il peut être avantageux d'éclairer une zone 22 de longueur L légèrement supérieure à la longueur utile D et d'utiliser une barette comportant plus de 1000 senseurs, par exemple 1024. Le supplément de largeur permet de superposer les zones analysées successivement et d'admettre des décalages de plusieurs unités de résolution. Pour améliorer la résolution, il peut être envisagé d'utiliser un autre détecteur 13 semblable au détecteur 12 éclairé par une partie du faisceau séparé par une lame semi-réfléchissante 11. Le positionnement du détecteur 13 correspond à un décalage dans l'espace égal à la moitié du pas I des barettes détectrices. Chaque photodétecteur délivre N signaux analogiques correspondant au facteur de transmission des N points élémentaires de la zone 22 de l'échantillon. La suite de la description montrera le mode d'exploitation de ces signaux en vue du contrôle.

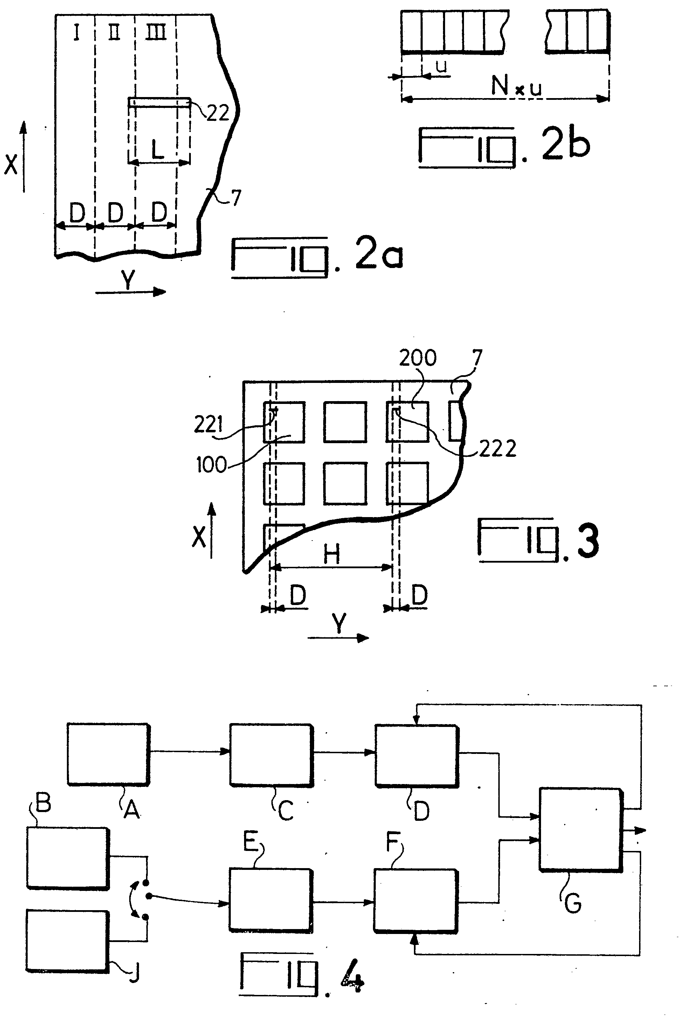

La figure 2 montre des détails de l'échantillon analysé 7. On peut voir en (a) une portion de l'échantillon 7 décomposé en bandes parallèles I, II, III. de largeur D. On a également représenté sur la figure la zone 22 de longeur L légèrement supérieure à D, dont l'image est formée sur le photodétecteur 12. La zone 22 est représentée en (b). Elle est formée de N "points" élémentaires de largeur u égale à l'unité de résolution. On réalise un balayage de la façon suivante: la table interférométrique sur laquelle est placé l'échantillon 7 est déplaçable dans la direction X qui est celle des bandes I, II, III. Le bâti mécanique 17 est déplaçable pas à pas dans une direction Y perpendiculaire à X. Les bandes successives sont ainsi analysées successivement: lorsque la bande I a été

entièrement analysée grâce au déplacement relatif de l'échantillon et du dispositif optique dans la direction X, le bâti 17 se déplace dans la direction Y, la table revient à sa position première et la bande II peut être analysée, comme la bande I, etc. . . La vitesse de la table est choisie en fonction du temps de travail par point désiré, par exemple 50 ns. Un compteur associé à l'interféromètre de position X délivre un train d'impulsions de synchronisation, définissant des lignes se succèdant le long d'une bande dans la direction X. Grâce à l'effet d'intégration du photodétecteur, on peut considérer que les signaux restent constants sur la largeur d'une ligne qui est égale, par exemple à l'unité de résolution. La translation selon la direction X est assurée par un moteur asservi sur les impulsions délivrées par le compteur. L'entrainement du bâti mécanique 17 peut être assuré par un moteur pas à pas et le positionnement fin assuré par des céramiques pièzo-électriques.

Pour le contrôle d'un réticule, l'échantillon analysé 7 est le réticule lui-même, porteur d'un motif unique. Les signaux issus du photodétecteur, convertis en signaux logiques, sont comparés aux signaux issus d'un système de description comportant une bande magnétique contenant les donées concernant le motif de référence, comme on le verra par le suite. Pour le contrôle d'un masque, porteur d'un grand nombre de motifs réputés semblables, les motifs sont comparés deux à deux. On utilise alors un deuxième dispositif d'analyse identique à celui de la figure 1, les deux dispositifs étant contenus dans un bâti commun. La figure 3 représente les traces sur l'échantillon examiné 7 des deux faisceaux d'éclairement. Il s'agit de la zone 221 sur un motif 100 considéré comme le motif à contrôler et de la zone 222 sur un autre motif 200 considéré comme le motif de référence. La distance H entre ces deux zones est égale à 1 ou plusieurs fois le pas de la matrice de motifs. Les deux motifs sont analysés simultanément puisqu'ils appartiennent à un même échantillon, déplaçable en X, et que les deux dispositifs optiques sont solidaires mécaniquement d'un même bâti, déplaçable en Y. On pourrait aussi envisager de comparer deux masques, pourvu qu'ils soient portés par une table commune.

La figure 4 est un bloc-diagramme du système de contrôle complet. Un dispositif optique A tel que celui de la figure 1 analyse le motif à contrôler. Il fournit des données à un système d'enregistrement-lecture C composé essentiellement de registres à décalage, qui permet de disposer simultanément d'informations concernant plusieurs lignes successives. Le système C est suivi d'un dispositif de sélection de données D chargé de sélectionner parmi toutes les informations délivrées par le système C celles qui vont être utilisées. Un autre système d'enregistrement-lecture E reçoit les signaux concernant le motif de référence, qui proviennent, soit d'un dispositif optique B semblable au dispositif optique A, pour le contrôle des masques, soit d'un système de description à bande magnétique J, pour le contrôle des réticules. Le système E est suivi d'un dispositif de sélection de données F. Les informations délivrées par les dispositifs de sélection D et F sont traitées par un dispositif de comparaison G qui délivre d'une part des indications relatives à la comparaison des deux motifs, d'autre part des ordres de sélection aux dispositifs D et F, en fonction des résultats des comparaisons. Les dispositifs A et B ont été décrits plus haut, la suite de la description porte sur les dispositifs C, D, E, F, G et J.

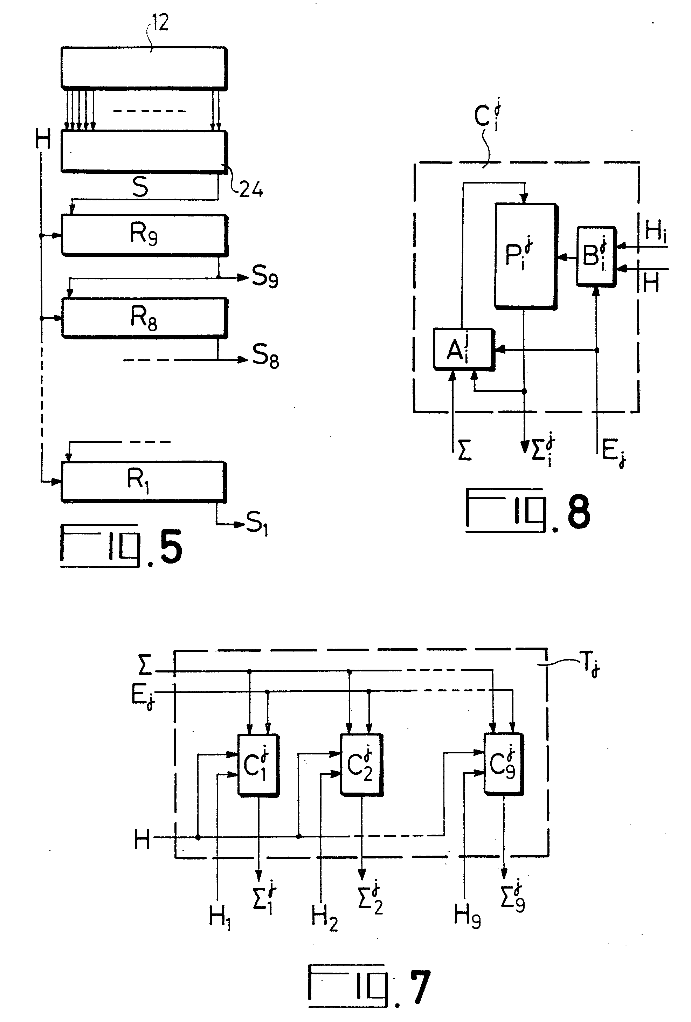

La figure 5 représente un système d'enregistrement-lecture des informations concernant le motif à contrôler.

Les signaux issus du détecteur 12 sont envoyés dans un dispositif logique 24 qui en fonction d'un seuil de décision déterminé par avance, les transforme respectivement en bits indiquant l'opacité ou la transparence des points analysés correspondants. Tous les bits associés à une même ligne qui arrivent simultanément dans le dispositif 24 y sont stokés de façon à être envoyés séquentiellement à un 1er registre à décalage $R_9$. Ce registre est suivi de 8 autres registres à décalage $R_8$ à $R_1$, la sortie d'un registre $R_i$ étant reliée à l'entrée du registre $R_{i-1}$. La capacité de chaque registre est égale au nombre de bits correspondant à une ligne d'une bande. Ainsi, lorsque le registre $R_9$ contient une ligne entière, et que le 1er bit de la ligne suivante arrive à l'entrée S de ce registre, les registres $R_8$ à $R_2$ contiennent respectivement les 8 lignes précédentes. Sur les sorties respectives $S_1$ à $S_9$ des registres $R_1$ à $R_9$, on dispose des bits associés aux points testés sur une même colonne dans 9 lignes successives. Tous les registres sont commandés par un même signal d'horloge H. Leur écriture et leur lecture s'effectue simultanément. En début de contrôle, la ligne contrôlée est celle qui est contenue dans le registre $R_5$, qui est le registre central. Comme on le verra par la suite, en fonction des éventuels décalages détectés dans la direction Y, la ligne contrôlée pourra provenir d'un autre registre ($R_2$ à $R_8$), ce qui permet d'admettre en fin de contrôle un décalage maximum en Y de 3 unités en avant ou en arrière. Par la suite, on affectera aux lignes successives des numéros croissants et elles seront appelées $L_1$, $L_2$ . . . Pendant l'analyse de $L_1$ provenant du registre $R_5$, la ligne $L_6$ entre dans le registre $R_9$. La durée d'enregistrement-lecture d'une ligne étant égale à T, le début du contrôle de la ligne $L_1$ est décalée de 6T par rapport à son enregistrement dans la mémoire 24.

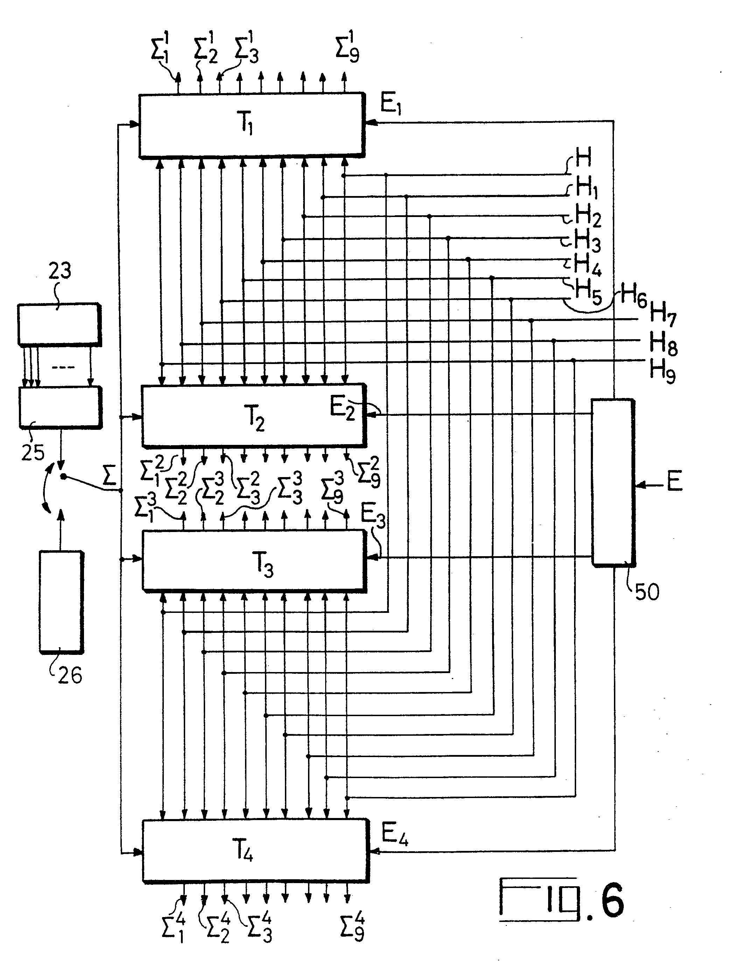

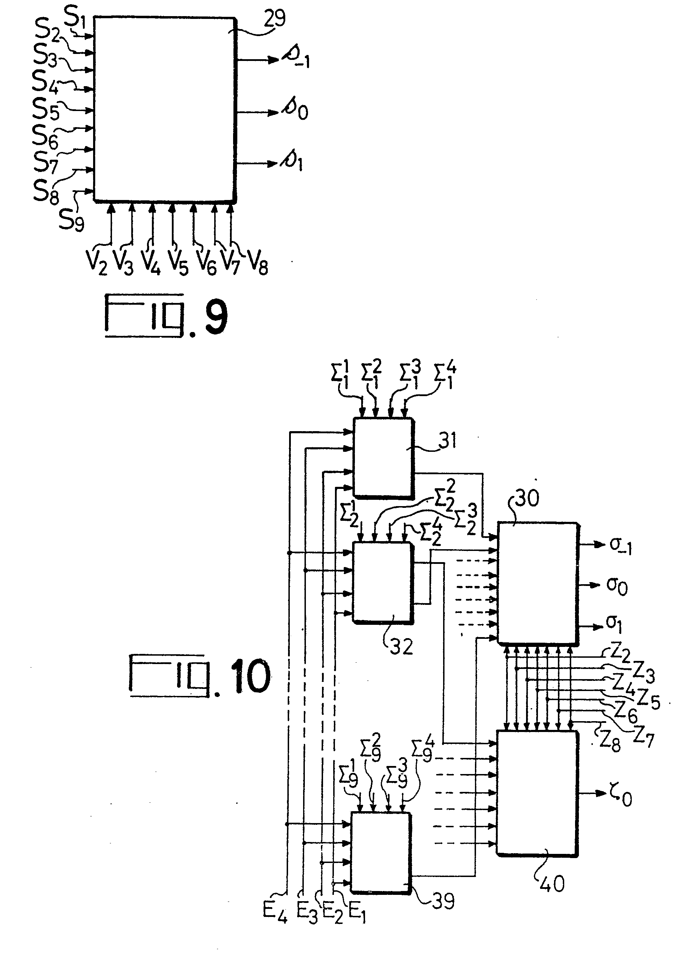

Le système d'enregistrement et de lecture des données $\Sigma$ concernant le motif de référence est différent. Il est représenté sur la figure 6. Ces données $\Sigma$ peuvent provenir de deux sources. Dans le cas d'un contrôle relatif de 2 motifs d'un même masque, les signaux analogiques sont issus d'un détecteur 23 et sont comparés au même seuil de référence que les signaux issus du détecteur 12. Les bits obtenus sont stockés dans un dispositif logique 25 qui fournit en série les bits $\Sigma$ concernant les signes successives. Dans le cas du contrôle absolu d'un réticule, on obtient la série de bits $\Sigma$ à partir d'un lecteur de bande magnétique 26. Ce lecteur effectue un traitement logique des informations inscrites sur la bande sous forme codée, de façon à les transformer en données identiques à celles qu'on aurait obtenues par analyse directe du motif, c'est-à-dire ligne par ligne puis bande par bande. Les bits $\Sigma$ sont envoyés dans 4 ensembles d'enregistrement-lecture $T_1$, $T_2$, $T_3$, $T_4$ comportant essentiellement des registres à décalage. Un multiplexeur 50 synchronisé par un signal d'horloge E de période T, qui est la durée d'enregistrement-lecture d'une ligne commune aux systèmes des figures 4 et 6, fournit 4 signaux impulsionnels de sélection $E_1$, $E_2$, $E_3$, $E_4$ permettant un enregistrement et une lecture cycliques des 4 ensembles $T_1$ à $T_4$. L'enregistrement est synchronisé par une horloge H commune avec le système d'analyse du motif à contrôler. La lecture est synchronisée par des trains d'impulsions $H_1$, $H_2$ . . . . $H_9$ de même fréquence que H mais décalés les uns sur les autres d'une période: $H_5$ est en phase avec H; $H_4$, $H_3$, $H_2$, $H_1$ sont respectivement en avance sur H de 1, 2, 3, 4 périodes: $H_6$, $H_7$, $H_8$, $H_9$ sont respectivement en retard sur H de 1, 2, 3, 4 périodes. Lors de l'analyse d'un ensemble $T_j$, les signaux présents sur les sorties $\Sigma_1^j$, $\Sigma_2^j$, . . . , $\Sigma_9^j$ correspondent à la même ligne mais avec des décalages respectifs en X de $-4, -3, -2, -1, 0$, 1, 2, 3, 4 unités sur la ligne correspondante de motif à contrôler. Les figures 7 et 8 apportent des précisions au schéma général de la figure 6. La figure 7 donne la structure d'un ensemble $T_j$. Il comprend 9 unités de décalage $C_1^j$ à $C_9^j$ synchronisées soit par l'horloge H, pour l'enregistrement, soit respectivement par les horloges $H_1$ à $H_9$, pendant l'enregistrement des autres ensembles. La sélection entre H et $H_i$ se fait au niveau de l'unité $C_i^j$ par le signal de sélection $E_i$, grâce à un dispositif d'aiguillage $B_i^j$ représenté sur la figure 8. Cette figure représente la structure d'une unité $C_i^j$. Elle comprend un registre à décalage $P_i^j$ capable de contenir tous les bits d'une ligne du motif de référence comme les registres $T_i$ pour le motif à contrôler. Un dispositif d'aiguillage $A_i^j$ permet d'appliquer les bits $\Sigma$ à l'entrée du registre $P_i^j$, pour l'enregistrement d'une ligne sur 4. Pendant l'enregistrement des 3 lignes suivantes dans les 3 autres ensembles, l'aiguillage $A_i^j$ permet de relier la sortie du registre $P_i^j$ à son entrée, afin de ne pas perdre l'information qui y est contenue. L'aiguillage $B_i^j$, qui commute en même temps que $A_i^j$ sélectionne soit l'horloge H, pendant l'enregistrement, soit l'horloge $H_i$. La commande des aiguillages $A_i^j$ et $B_i^j$ s'effectue par le signal binaire $E_i$ provenant du multiplexeur 50, qui a, par exemple, la forme suivante: $E_j = 1$ pendant la durée d'une ligne, une ligne sur 4, ce qui correspond à la phase d'enregistrement du registre $P_i^j$: $A_i^j$ sélectionne $\Sigma$ et $B_i^j$ sélectionne H; $E_j = 0$ pendant l'enregistrement des 3 lignes suivantes dans les 3 autres ensembles: $A_i^j$ sélectionne $\Sigma_i$ et $B_i^j$ sélectionne $H_i$. Tous les aiguillages peuvent être réalisés de la même façon, par exemple avec deux portes "ET" suivies d'une porte "OU".

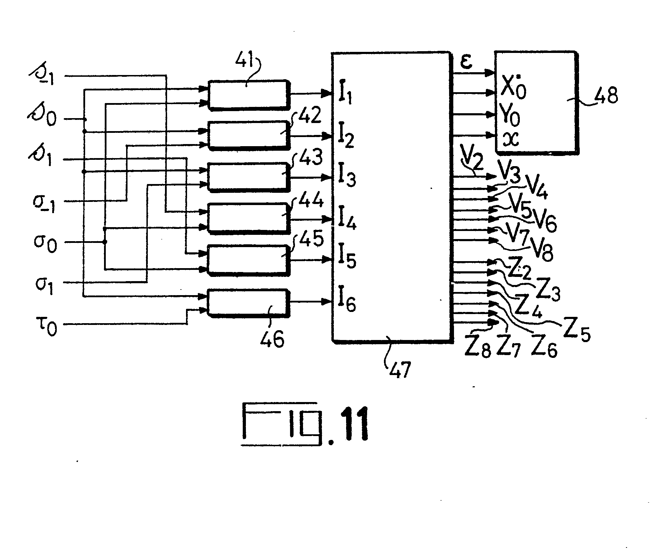

Comme il a été dit précédemment, tous les registres ne sont pas utilisés pour la vérification d'une ligne. La figure 9 représente un dispositif de sélection 29 des registres à examiner concernant le motif à contrôler. Ce dispositif sélectionne, parmi les sorties $S_1$ à $S_9$ des registres $R_1$ à $R_9$ de la figure 4, trois de ces sorties, notées sur la figure $s_{-1}$, $s_0$, $s_1$. En début d'analyse, on examine les 3 registres centraux, c'est-à-dire que $s_{-1} = S_4$, $s_0 = S_5$, $s_1 = S_6$. Ensuite, en fonction des résultats de l'analyse d'une ligne, on peut, soit conserver les mêmes registres, soit effectuer un décalage d'un registre en avant ou en arrière. La sélection des 3 régistres est commandée par 7 signaux binaires $V_2$, $V_3$, $V_4$, $V_5$, $V_6$, $V_7$, $V_8$ dont l'un est à l'état "1" pendant que les autres sont à l'état "0" (ou bien l'inverse). L'indice k du signal $V_k$ qui est à l'état "1" correspond à l'indice du signal $S_k$ qui sera choisi pour $s_0$, on aura alors $S_{-1} = S_{k-1}$ et $S_1 = S_{k+1}$. Les signaux $V_2$ à $V_8$ sont issus du dispositif de comparison, comme on le verra par la suite. Ce dispositif de sélection 29 peut être réalisé à l'aide de portes logiques.

Pour le motif de référence, il faut sélectionner tout d'abord parmi les ensembles d'enregistrement $T_1$, $T_2$, $T_3$, $T_4$ celui qui contient la ligne à analyser et celui qui contient la ligne suivante, puis, parmi les 9 registres du 1er ensemble, les 3 registres à examiner et parmi les 9 registres de l'autre ensemble, 1 registre à examiner. Le dispositif de sélection es représenté sur la figure 10. Il comprend 9 unités de sélection 31 à 39 commandés par les signaux binaires $E_1$, $E_2$, $E_3$, $E_4$ ayant une sortie délivrant respectivement les signaux $\Sigma_1^j$ à $\Sigma_9^j$ où j est déterminé par le fait que $E_{j-1} = 1$. Les unités 32 à 38 ont en outre une deuxième sortie délivrant respectivement les signaux $\Sigma_2^{j+1}$ à $\Sigma_8^{j+1}$. En effet, pendant l'écriture d'un ensemble $T_{j-1(\text{mod } 4)}$ (on a alors $E_{j-1} = 1$ et les 3 autres signaux sont à l'état "0"), on analyse la ligne contenue dans l'ensemble $T_j$ et on lit également la ligne suivante qui est contenue dans l'ensemble $T_{j+1 \text{ (mod 4)}}$. Les signaux $\Sigma_1^j$ à $\Sigma_9^j$ sont appliqués à une unité de sélection 30 ayant trois sorties $\sigma_{-1}$, $\sigma_0$, $\sigma_1$ et les signaux $\Sigma_2^{j+1}$ à $\Sigma_8^{j+1}$ sont appliqués à une unité de sélection 40 ayant une sortie $\tau_0$. Les unités 30 et 40 sont commandées par 7 signaux binaires $Z_2$ à $Z_8$ dont l'un est à l'état "1" pendant que les autres sont à l'état "0". L'indice k du signal $Z_k$ qui est à l'état "1" correspond à celui des signaux $\Sigma_k^j$ qui sera sélectionné pour $\sigma_0$ et à celui des signaux $\Sigma_k^{j+1}$ qui sera sélectionné pour $\tau_0$. On aura alors

On aura alors $\sigma_{-1} = \Sigma_{k-1}^j$ et $\sigma_1 = \Sigma_{k+1}^j$. En début d'analyse $k = 5$. A partir de l'analyse de la 2ème ligne, les signaux $Z_2$ à $Z_8$ sont issus du dispositif de comparaison. Les unités de sélection 31 à 39, 30 et 40 peuvent être réalisées à l'aide de portes logiques.

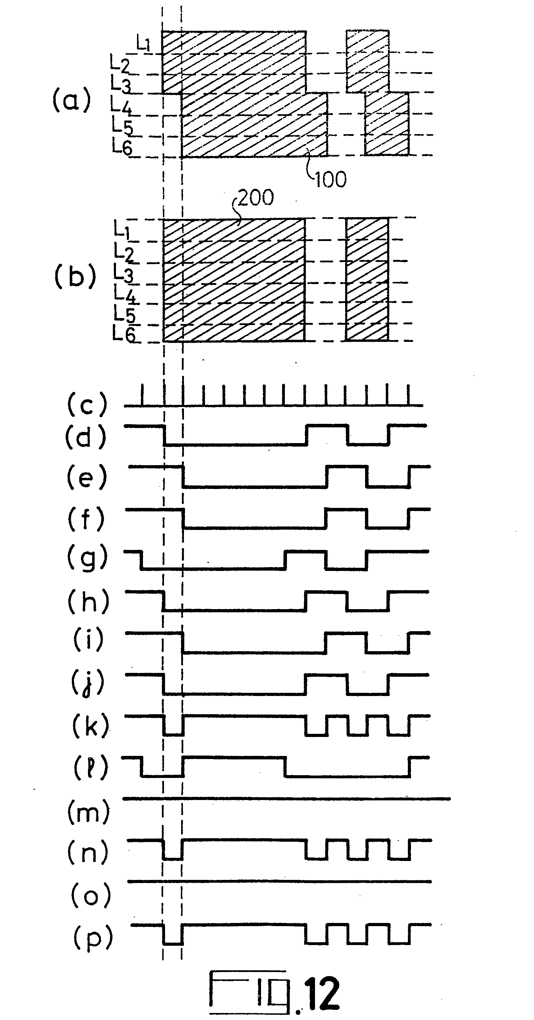

Le dispositif de comparaison est représenté sur la figure 11. Il comprend 6 comparateurs 41 à 46, par exemple des portes "Ou exclusif." Trois de ces comparateurs effectuent les comparaisons du signal $s_0$ correspondant à la ligne à analyser du motif à contrôler avec les signaux $\sigma_0$, $\sigma_{-1}$, $\sigma_1$ correspondant à la ligne à analyser du motif de référence, lues avec des horloges différentes. Deux autres comparateurs effectuent les comparaisons du signal $\sigma_0$ avec les signaux $s_{-1}$ et $s_1$ correspondant respectivement à la ligne précédente et à la ligne suivante de la ligne à analyser du motif de référence. Le 6ème comparateur effectue la comparaison du signal $s_0$ avec le signal $\tau_0$ correspondant à la ligne suivante de la ligne à analyser du motif de référence, lue avec la même horloge que $\sigma_0$. Les signaux $I_1$ à $I_6$ résultant des comparaisons fournissent des informations sur le motif à contrôler. Ils sont par ailleurs envoyés à une unité de traitement 47 qui délivre les signaux de sélection $V_2$ à $V_8$ et $Z_2$ à $Z_8$ qui commandent les dispositifs de sélection des figures 9 et 10. La description du mode de fonctionnement du dispositif de comparaison sera faite à partir d'exemples. La similitude de la ligne analysée du motif à contrôler et de la ligne analysée du motif de référence est constatée lorsque le signal $I_1$ est à l'état "0" pendant toute la durée de lecture de ces deux lignes. L'unité de traitement 47 conserve alors les sorties $V_2$ à $V_8$ et $Z_2$ à $Z_8$ dans le même état pour l'analyse de la ligne suivante de 2 motifs. Lorsque le chronogramme du signal $I_1$ contient des "1", l'étude des autres signaux permet de déterminer s'il existe un décalage d'une unité en X ou en Y entre les deux motifs. L'unité de traitement 47 modifie alors l'état des sorties $V_2$ à $V_8$ ou $Z_2$ à $Z_8$ afin de tenir compte de ce décalage pour la ligne suivante. Quand aucun décalage n'est déterminé, on conclut à une erreur et l'analyse de la ligne suivante s'effectue sans changement d'état des signaux $V_2$ à $V_8$ et $Z_2$ à $Z_8$. Pour réaliser l'unité de traitement 47, on peut utiliser des éléments logiques notamment des bascules et des mémoires. Lorsqu'un décalage ou une erreur a été constaté, l'unité de traitement fournit des signaux caractérisant ce décalage ou cette erreur, par un exemple un signal $\varepsilon$ caractérisant le type de décalage (avant, arrière, en X, en Y) ou l'erreur et des signaux $X_0$, $Y_0$, x caractérisant respectivement l'abscisse de la bande, l'ordonnée de la ligne et l'abscisse dans la ligne où se situe le décalage ou l'erreur. Les signaux $\varepsilon$, $X_0$, $Y_0$, x peuvent être stockés dans une mémoire 48 en vue d'une utilisation ultérieure.

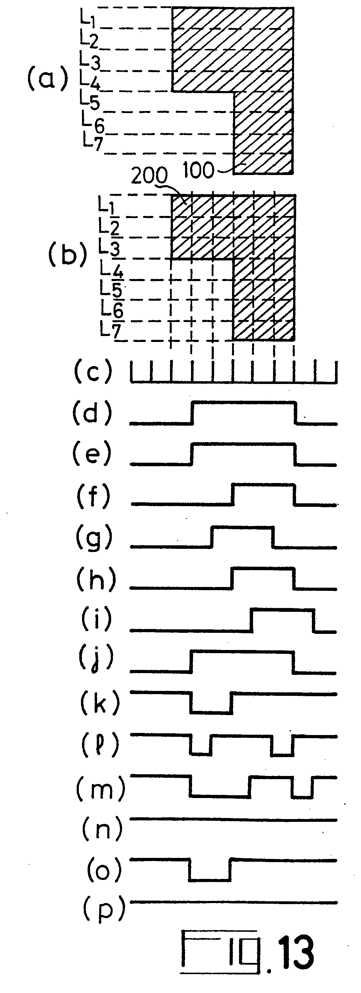

Les figures 12 à 15 illustrent des exemples de configuration de motifs et des différences pouvant exister entre le motif à contrôler 100, en (a) sur les figures, et le motif de référence 200, en (b) sur les figures. Pour tous ces exemples, la situation est la suivante:

— l'analyse des lignes $L_1$ à $L_3$ n'a révélé aucune erreur, donc $V_5 = 1$ et $Z_5 = 1$;

— les signaux logiques dont les chronogrammes sont représentés sous les deux motifs sont relatifs aux lignes $L_4$ des deux motifs ($E_4 = 1$);

— en début d'analyse de la ligne $L_4$, les registres $R_2$ à $R_9$ contiennent respectivement les lignes $L_1$ à $L_8$, $R_1$ étant vide et la ligne $L_9$ entre dans le registre $R_9$; les ensembles $T_3$, $R_4$, $T_1$, $T_2$ contiennent respectivement les lignes $L_3$, $L_4$, $L_5$, $L_6$ et la ligne $L_7$ entre dans $T_3$.

Comme aucun décalage n'a encore été détecté, les registres sélectionnés sont $R_4$, $R_5$, $R_6$ contenant respectivement les lignes $L_3$, $L_4$, $L_5$ du motif 100 et fournissant respectivement les signaux $s_{-1}$, $s_0$, $s_1$, $C_4^4$, $C_5^4$, $C_6^4$ contenant la ligne $L_4$ du motif 200 et fournissant respectivement les signaux $\sigma_{-1}$ $\sigma_0$, $\sigma_1$ et $C_5^1$ contenant la ligne $L_5$ du motif 200 et fournissant le signal $\tau_0$. Les chronogrammes représentés en (c), (d), . . (p) sont respectivement de ceux des signaux $s_{-1}$, $s_0$, $s_1$, $\sigma_{-1}$, $\sigma_0$, $\sigma_1$, $\tau_0$, $I_1 = S_0 \oplus \sigma_0$, $I_2 = S_0 \oplus \sigma_{-1}$, $I_3 = S_0 \oplus \sigma_1$, $I_4 = s_1 \oplus \sigma_0$, $I_5 = s_{-1} \oplus \sigma_0$, $I_6 = s_0 \oplus \tau_0$.

La figure 12 illustre un décalage arrière en X du motif à contrôler 100 par rapport au motif de référence 200, à partir de la ligne $L_4$. La présence de "O" dans le signal $I_1$ indique que les lignes $L_4$ des deux motifs ne sont pas identiques. L'absence de "O" dans le signal $I_3$ indique qu'il y a un décalage en X entre les deux motifs, le motif 100 étant en retard d'une unité sur le motif 200. Lors de l'analyse de la ligne suivante, il convient de tenir compte de ce décalage. L'unité de traitement 47 maintient à l'état "1" l'entrée $V_5$ du sélecteur 29, de façon à sélectionner à nouveau les registres $R_4$, $R_5$, $R_6$, la ligne analysée ensuite étant $L_5$ issue de $R_5$. Par contre, le signal $Z_5$ passe à l'état "0", alors que le signal $Z_6$ passe à l'état "1". D'autre part le multiplexeur fournit $E_1 = 1$ et $E_2 = E_4 = 0$, si bien que les registres sélectionnés sont $C_5^1$, $C_6^1$, $C_7^1$ contenant la ligne $L_5$ et $C_6^2$ contenant la ligne $L_6$, la sortie $\sigma_0$ du registre $C_6^1$ et la sortie $\tau_0$ du registre $C_6^2$ étant en retard d'une période sur la sortie $s_0$ du registre $R_5$. On peut déduire de la figure que l'identité des lignes $L_5$ des 2 motifs sera constatée.

La figure 13 illustre un décalage avant d'une unité en Y du motif 100 par rapport au motif 200. La présence de "O" dans les chronogrammes des signaux $I_1$, $I_2$, $I_3$ indique une différence entre les deux motifs qui n'est pas un décalage en X. La combinaison d'une absence de "O" dans $I_4$ et d'une présence de "O" dans $I_5$ indique un décalage en Y entre les deux motifs, le motif 100 étant en retard d'une ligne sur le motif 200. Pour l'analyse de la ligne suivante, l'unité de traitement 47 délivre un signal $V_6$ à l'état "1," de façon à sélectionner les registres $R_5$, $R_6$, $R_7$ et maintient $Z_5$ à l'état "1", de façon à sélectionner $C_4^1$, $C_5^1$, $C_6^1$, $C_5^2$: on analyse la ligne $L_6$

du motif 100 et $L_5$ du motif 200, ce qui permet de compenser le retard détecfe. Ces deux lignes sont lues en phase.

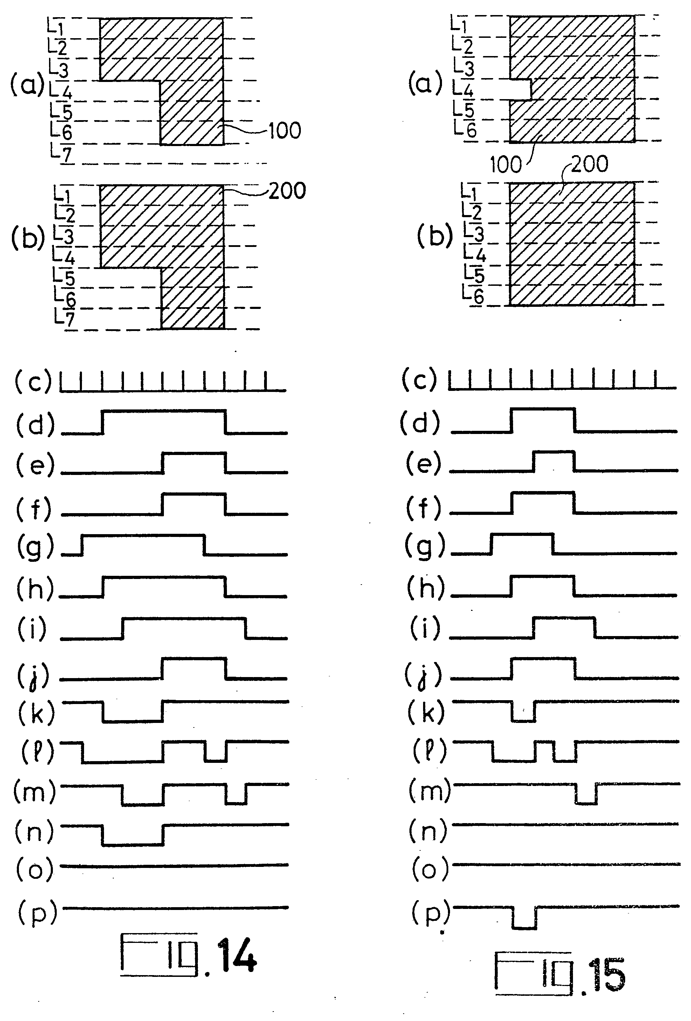

La figure 14 illustre un décalage arrière d'une unité en Y du motif 100 par rapport au motif 200. La présence de "O" dans les signaux $I_1$, $I_2$, $I_3$ indique qu'il n'y a pas identité ni décalage en X entre les deux motifs. La présence de "O" dans le signal $I_4$ exclue un décalage avant en Y. L'absence de "O" dans le signal $I_6$ permet de conclure à un décalage arrière en Y. Pour l'analyse de la ligne suivante, l'unité de traitement 47 fournit les sorites $V_4$ à $Z_5$ à l'état "1," sélectionnant ainsi les registres $R_3$, $R_4$, $R_5$, $C_4^1$, $C_5^1$, $C_6^1$, $C_5^2$. Le système effectue alors la comparaison des lignes $L_4$ du motif 100 et $L_5$ du motif 200, ces deux lignes étant lues en phase.

La figure 15 illustre une erreur dans le motif 100. Cet exemple permet de mieux comprendre la nécessité d'effectuer deux comparaisons: $s_1 \oplus \sigma_0$ et $s_{-1} \oplus \sigma_0$ pour conclure à un décalage avant en Y. En effet, dans l'exemple de la figure 15, on a une absence de "O" dans le signal $I_4 = s_1 \oplus \sigma_0$, alors qu'il ne s'agit pas d'un décalage. L'absence de "O" également dans le signal $I_5 = s_{-1} \oplus \sigma_0$ permet de conclure à une erreur car il ne peut y avoir 2 modifications successives de tracé dans le motif et la combinaison $\sigma_0 = s_1 = s_{-1}$ et $\tau_0 \neq s_0$ correspond à une erreur. Pour l'analyse de la ligne suivante, il n'y a pas de changement des signaux de sélection. Les lignes $L_5$ des deux motifs seont comparées entre elles, changement des signaux de sélection. Les lignes $L_5$ des deux motifs seront comparées entre elles, leur lecture étant en phase.

## Revendications

1. Appareil de contrôle d'un dessin inscrit sur un support plan (7) présentant deux niveaux de modulation pour un faisceau d'analyse, par rapport à un motif de référence, le dessin et le motif étant décomposables en zones élémentaires (22) formant dans une direction Y des lignes (I, II, III) se succédant dans une direction X, perpendiculaire à Y du type comportant:

— un dispositif d'analyse du dessin (A), ce dispositif comprenant des moyens de projection du faisceau (19) d'analyse permettant d'éclairer sur le support N zones élémentaires successives d'une même ligne, des moyens (8 à 10) formant l'image des N zones élémentaires sur un plan avec un grandissement G et un détecteur (12) à N cellules détectrices alignées situé dans le plan image, chaque cellule étant conjuguée optiquement avec l'une des zones élémentaires (22) éclairées par le faisceau d'analyse par rapport aux moyens imageurs, ledit détecteur délivrant des signaux S relatifs au niveau de modulation des zones élémentaires éclairées;

— des moyens de déplacement relatif du support par rapport au dispositif d'analyse, selon les deux directions X et Y, de façon à effectuer l'analyse ligne par ligne, par bandes de N zones élémentaires;

— des moyens fournissant des signaux $\Sigma$ relatifs au motif de référence décrit ligne par ligne, par bandes de N zones élémentaires;

— et deux dispositifs (C, D, E, F) de traitement respectivement des signaux S et $\Sigma$; appareil caractérisé en ce que, lesdites zone élémentaires (22) étant constituées de rectangles, les deux dispositifs fournissent simultanément des signaux sélectionnés relatifs à deux points homologues du dessin à contrôler et du motif de référence et des signaux relatifs à des points voisins présentant respectivement un décalage d'au moins un rectangle dans une même ligne et un décalage d'au moins une ligne dans la direction Y; et en ce qu'il comprend un dispositif de comparaison (G) des signaux ainsi sélectionnés et fournis par les deux dispositifs de traitement permettant de déterminer d'éventuels décalages entre le dessin et le motif selon les deux directions X et Y et de mettre en évidence d'éventuelles erreurs d'inscription dans le dessin irréductible à un décalage d'au moins un rectangle dans une même ligne et un décalage d'au moins une ligne dans la direction Y; et en ce qu'il comprend un dispositif de comparaison (G) des signaux ainsi sélectionnés et fournis par les deux dispositifs de traitement permettant de déterminer d'éventuels décalages entre le dessin et le motif selon les deux directions X et Y et de mettre en évidence d'éventuelles erreurs d'inscription dans le dessin irréductible à un décalage.

2. Appareil selon la revendication 1, caractérisé en ce que les moyens de déplacement relatif du dispositif d'analyse par rapport au support comprennent des moyens de déplacement continu du support selon la direction X et des moyens de déplacement pas à pas du dispositif d'analyse selon la direction Y, les deux déplacements permettant au faisceau d'analyse de balayer toute la surface du support.

3. Appareil selon la revendication 2, caractérisé en ce que le dispositif de traitement des signaux S comprend un dispositif logique (24) fournissant en série des signaux binaires, le dessin étant ainsi décrit ligne par ligne par deux niveaux de modulation, un ensemble de n registres à décalage ($R_1$ à $R_9$), la capacité de chaque registre étant égale à N, fournissant séquentiellement sur leurs n sorties respectives ($S_1$ à $S_9$) les séquences synchrones de signaux binaires correspondant au niveau de modulation des N rectangles de n lignes successives et un premier dispositif de sélection (29) sélectionnant, parmi les n séquences, les séquences de signaux binaires $s_0$, $s_{-1}$, $s_1$ correspondant respectivement à la ligne à examiner et aux lignes précédente et suivante.

4. Appareil selon la revendication 2, caractérisé en ce que le motif de référence (200) est inscrit sur le même support plan (7) que le dessin à contrôler (100).

5. Appareil selon la revendication 4, caractérisé en ce que les moyens fournissant les signaux caractéristiques du motif de référence comprennent un 2ème dispositif d'analyse (B) identique au dispositif d'analyse du dessin (A), les deux dispositifs d'analyse étant solidaires mécaniquement.

6. Appareil selon la revendication 2, caractérisé en ce que le motif de référence est décrit dans une bande magnétique (J) sous forme codée sous la forme de signaux binaires.

7. Appareil selon la revendication 6, caractérisé en ce que les moyens (J) fournissent les signaux caractéristiques du motif de référence comprennent un circuit logique de décodage des signaux binaires inscrits sur la bande magnétique, ce circuit logique fournissant des séquences de signaux caractéristiques $\Sigma$ décrivant le motif ligne par ligne, les dimensions des rectangles formant les lignes ayant les mêmes dimensions que ceux du dessin à contrôler.

8. Appareil selon l'une des revendications 5 et 7, caractérisé en ce que le dispositif de traitement des signaux $\Sigma$ comprend p ensembles ($T_1$ à $T_4$) de m registres à décalage, la capacité de chaque registre étant égale à N, chaque ensemble de registres étant chargé cycliquement par une ligne sur p, les m registres de chaque ensemble fournissant sur leurs sorties respectives m séquences de signaux binaires correspondant au niveau de modulation des N rectangles d'une même ligne, les séquences étant déphasées les unes par rapport aux autres, de façon qu'à un instant donné, les signaux fournis par les m sorties correspondent respectivement au niveau de modulation de m rectangles successifs, un deuxième dispositif de sélection (30, 40) sélectionnant trois séquences de signaux binaires $\sigma_{-1}$, $\sigma_0$, $\sigma_1$ fournies par 3 registres successifs d'un même ensemble correspondant à 3 rectangles successifs de la ligne à examiner et une séquence de signaux binaires $\tau_0$ synchrones de $\sigma_0$ d'un ensemble correspondant à la ligne suivante.

9. Appareil selon les revendications 3 et 8, caractérisé en ce que le dispositif de comparaison (41—46) reçoit les séquences de signaux binaires $s_{-1}$, $s_0$, $S_1$, $\sigma_{-1}$, $\sigma_0$, $\sigma_1$, $\tau_0$, effectue les comparaisons $s_0$ avec $\sigma_{-1}$, $\sigma_0$, $\sigma_1$, $\tau_0$ et de $\sigma_0$ avec $s_{-1}$, $s_1$, donne pour chaque ligne en fonction des résultats des comparaisons l'une des informations suivantes:

— identité de la ligne à examiner du dessin à contrôler er de la ligne à examiner du motif à contrôler;

— décalage en X d'une ligne entre le dessin et le motif;

— décalage en Y d'un rectangle entre le dessin et le motif;

et fournit aux deux dispositifs de sélection des signaux de sélection permettant de tenir compte, à la ligne suivante, du décalage éventuel déterminé.

10. Appareil selon la revendication 9, caractérisé en ce que m = n = 9 et p = 4, en vue de permettre en fin de contrôle la détection dans chacune des deux directions X et Y d'un maximum de 3 décalages dans le même sens du motif par rapport au dessin.

11. Appareil selon l'une des revendication 1 à 10, caractérisé en ce que le faisceau d'analyse (19) est un faisceau lumineux.

## Claims

1. Apparatus for inspecting a design marked on a plane support (7) having two modulation levels for an analysis beam, with respect to a reference subject, the design and the subject being susceptible of decomposition into elementary zones (22) forming lines (I, II, III) along one direction Y and succeeding in a direction X which is perpendicular to Y, of the type comprising:
— A device (A) for analyzing the design, said device comprising means (19) for projecting the analyzing beam allowing to illuminate N successive elementary zones of the same line on the support, means (8—10) forming an image of the N elementary zones on a plane with a magnification G, and a detector (12) with N aligned detector cells lying in the image plane, each cell being optically conjugate with one of the elementary zones (22) illuminated by the analyzing beam with respect to the imaging means, said detector delivering signals S relating to the modulation level of the illuminated elementary zones;
— means for a relative displacent of the support with respect to the analyzing device along the two directions X and Y, in a manner to perform the analysis line by line in bands of N elementary zones;
— means providing signals Σ relating to the reference subject described line by line in bands of N elementary zones;
— and two devices (C, D, E, F) for processing of the signals S and Σ, respectively; said apparatus being characterized in that, said elementary zones (22) being formed by rectangles, the two devices provide simultaneously selected signals relating to two corresponding points of the design to be inspected and the reference subject and signals relating to adjacent points, respectively having a displacement of at least one rectangle in the same line and a displacement of at least one line in the Y direction; and in that it comprises a device (G) for comparing the thus selected signals provided by the two processing devices allowing to determine eventual displacements between the design and the subject in both the X and Y directions and the recognition of eventual marking errors in the design which cannot be reduced to a displacement.

2. Apparatus in accordance with claim 1, characterized in that the means for relative displacement of the analyzing device with respect to the support comprise means for con-tinuous displacement of the support along the X direction and means for stepwise displacement of the analyzing device along the Y direction, the two displacements allowing the analyzing beam to scan the total surface of the support.

3. Apparatus in accordance with claim 2, characterized in that the device for processing the signals S comprises a logic device (24) serially providing binary signals, the design being thus described line by line by two modulation levels, a group of n shift registers ($R_1$ to $R_9$), the capacity of each register being N, sequentially providing, at their n respective outputs ($S_1$ to $S_9$), the synchronous binary signal sequences corresponding to the modulation level of the N rectangles of n successive lines, and a first selection device (29) selecting within n sequences those binary signal sequences $s_0$, $s_{-1}$, $s_1$ respectively corresponding to a line to be inspected and to the preceding and following lines.

4. Apparatus in accordance with claim 2, characterized in that the reference subject (200) is marked on the same plane support (7) as the design to be inspected (100).

5. Apparatus in accordance with claim 4, characterized in that the means providing the signals which are characteristic of the reference subject comprise a second analyzing device (B) identical with the device (A) for analyzing the design, the two analyzing devices being mechanically connected.

6. Apparatus in accordance with claim 2, characterized in that the reference subject is marked on a magnetic tape (J) in coded form in form of binary signals.

7. Apparatus in accordance with claim 6, characterized in that the means (J) providing the signals which are characteristic of the reference subject comprise a logic circuit for decoding the binary signals recorded on a magnetic tape, said logic circuit providing the sequences of characteristic signals Σ describing the subject line by line, the dimensions of the rectangles forming the lines having the same dimensions as those of the design to be inspected.

8. Apparatus in accordance with one of claims 5 and 7, characterized in that the device for processing the signals Σ comprises p groups ($T_1$ to $T_4$) of m shift registers, the capacity of each register being N, each group of registers being cyclically charged by one per p lines, the m registers of each group providing, at their respective outputs, m binary signal sequences corresponding to the modulation level of the N rectangles of a same line, the sequences being mutually phase shifted, so that at a given moment, the signals provided by the m outputs respectively correspond to the modulation level of m successive rectangles, a second selection device (30, 40) selecting three binary signal sequences $\sigma_{-1}$, $\sigma_0$, $\sigma_1$ provided by three successive registers of the same group corresponding to three successive rectangles of the line to be inspected and a sequence of binary

signals $\tau_0$, synchronous with $\sigma_0$, of a group corresponding to the following line.

9. Apparatus in accordance with claims 3 and 5, characterized in that the comparing device (41—46) receives the binary signal sequences $s_{-1}$, $s_0$, $s_1$, $\sigma_{-1}$, $\sigma_0$, $\sigma_1$, $\tau_0$, performs the comparisons $s_0$ with $\sigma_{-1}$, $\sigma_0$, $\sigma_1$, $\tau_0$ and of $\sigma_0$ with $s_{-1}$, $s_1$, provides the following informatiion for each line depending on the comparison results:
— Identity of the line to be examined of the design to be inspected and the line to be examined of the subject to be inspected;
— X displacement by one line between the design and the subject;
— Y displacement by one rectangle between the design and the subject;
and provides to the two selection devices selection signals allowing to take into account the eventual displacement determined at the following line.

10. Apparatus in accordance with claim 9, characterized in that $m = n = 9$ and $p = 4$, in order to allow, at the end of the inspection, the detection of a maximum of three displacements of the subject with respect to the design in the same sense of the two directions X and Y.

11. Apparatus in accordance with any of claims 1 to 10, characterized in that the analyzing beam (19) is a light beam.

## Patentansprüche

1. Gerät zur Überprüfung einer Zeichnung, die auf einem ebenen Träger (7) mit zwei Modulationsniveaus für ein Analysebündel aufgezeichnet ist, in bezug auf ein Referenzmotiv, wobei die Zeichnung und das Motiv in Elementarzonen (22) zerlegbar sind, die in einer Richtung Y Linien (I, II, III) bilden, die in einer Richtung X, die senkrecht zu Y ist, aufeinander folgen, derjenigen Art, daß es enthält:
— eine Vorrichtung (A) zur Analyse der Zeichnung, wobei dies Vorrichtung Mittel (19) zur Projektion des Analysebündels, durch welche auf dem Träger N aufeinanderfolgende Elementarzonen einer selben Linie beleuchtet werden können, Mittel (8 bis 10), die ein Bild der N Elementarzonen auf einer Ebene mit einer Vergrößerung G erzeugen, und einen Detektor (12) mit N ausgerichteten Detektorzellen, der in der Bildebene angeordnet ist, umfaßt, wobei jede Zelle mit einer der von dem Analysebündel beleuchteten Elementarzonen (22) optisch konjugiert ist in bezug auf die Abbildungsmittel, wobei der Detektor Signale S abgibt, die das Modulationsniveau der beleuchteten Elementarzonen betreffen;
— Mittel zur Relativbewegung des Trägers in bezug auf die Analysevorrichtung in den zwei Richtungen X und Y, so daß die Analyse Linie pro Linie in Streifen aus N Elementarzonen erfolgt;
— Mittel, welche Signale $\Sigma$ liefern, die das Linie pro Linie in Streifen aus N Elementarzonen beschriebene Referenzmotiv betreffen;
— und zwei Vorrichtungen (C, D, E, F) zur Verarbeitung jeweils der Signale S und $\Sigma$; wobei das Gerät dadurch gekennzeichnet ist daß bei rechtwinklig ausgebildeten Elementarzonen (22) die zwei Vorrichtungen gleichzeitig ausgewählte Signale, welche zwei einander entsprechende Punkte der zu überprüfenden Zeichnung sowie des Referenzmotivs betreffen, und Signale liefern, welche benachbarte Punkte betreffen, die jeweils eine Verschiebung um wenigstens ein Rechteck in einer selben Linie sowie eine Verschiebung um wenigstens eine Linie in der Y-Richtung aufweisen; und daß es eine Vorrichtung (G) zum Vergleichen der so ausgewählten und von den zwei Verarbeitungsvorrichtungen gelieferten Signale umfaßt, die es ermöglicht, eventuelle Verschiebungen zwischen der Zeichnung und dem Motiv in den beiden Richtungen X und Y festzustellen und eventuelle Aufzeichnungsfehler in der Zeichnung erkennbar zu machen, die nicht auf eine Verschiebung zurückführbar sind.

2. Gerät nach Anspruch 1, dadurch gekennzeichnet, daß die Mittel zur Relativverschiebung der Analysevorrichtung in bezug auf den Träger Mittel zur kontinuierlichen Verschiebung des Trägers in der X-Richtung und Mittel zur schrittweisen Verschiebung der Analysevorrichtung in der Y-Richtung umfassen, wobei diese beiden Verschiebungen dem Analysebündel die Abtastung der gesamten Oberfläche des Trägers ermöglichen.

3. Gerät nach Anspruch 2, dadurch gekennzeichnet, daß die Vorrichtung zur Verarbeitung der Signale S eine logische Vorrichtung (24), die Binärsignale in Serie liefert, wobei die Zeichnung auf diese Weise Linie pro Linie durch zwei Modulationsniveaus beschrieben wird, eine Gruppe von n Schiebereigistern ($R_1$ bis $R_9$), deren Kapazität jeweils gleich N ist und die sequentiell an ihren n Ausgängen ($S_1$ bis $S_9$) jeweils synchrone Sequenzen von Binärsignalen liefern, die dem Modulationsniveau der N Rechtecke von n aufeinander folgenden Linien entsprechen, und eine erste Selektionsvorrichtung (29) umfaßt, die unter den n Sequenzen diejenigen Sequenzen von Binärsignalen $s_0$, $s_{-1}$, $s_1$ auswählt, welche jeweils der zu untersuchenden Linie bzw. der vorausgehenden Linie und der nachfolgenden Linie entsprechen.

4. Gerät nach Anspruch 2, dadurch gekennzeichnet, daß das Referenzmotiv (200) auf demselben ebenen Träger (7) wie die zu überprüfende Zeichnung (100) aufgezeichnet ist.

5. Gerät nach Anspruch 4, dadurch gekennzeichnet, daß die Mittel, welche die für das Referenzmotiv charakteristischen Signale liefern, eine zweite Analysevorrichtung (B) umfassen, die gleich der Vorrichtung (A) zur Analyse der Zeichnung ist, wobei die beiden Analysevorrichtungen mechanisch miteinander verbunden sind.

6. Gerät nach Anspruch 2, dadurch gekennzeichnet, daß das Referenzmotiv auf einem Magnetband (J) in Form von Binärsignalen codiert aufgezeichnet ist.

7. Gerät nach Anspruch 6, dadurch gekennzeichnet, daß die Mittel (J), welche die für das Referenzmotiv charakteristichen Signale liefern, eine logische Decodierschaltung zum Decodieren der auf dem Magnetband aufgezeichneten Binärsignale umfaßt, wobei diese logische Schaltung charakteristische Signalsequenzen $\Sigma$ liefert, die das Motiv Linie pro Linie Beschrieben, wobei die Abmessungen der de Linien bildenden Rechtecke dieselben Abmessungen haben wie diejenigen der zu überprüfenden Zeichnung.

8. Gerät nach einem der Ansprüche 5 und 7, dadurch gekennzeichnet, daß die Vorrichtung zur Verarbeitung der Signale $\Sigma$ p Gruppen ($T_1$ bis $T_4$) von m Schieberegistern umfaßt, wobei die Kapazität jedes Registers gleich N ist, wobei jede Gruppe von Registern zyklisch mit einer aus p Linien geladen wird, wobei die m Register jeder Gruppe an ihren jeweiligen Ausgängen m Binärsignalsequenzen liefern, welche dem Modulationsniveau der N Rechtecke einer selben Linie entsprechen, wobei dei Sequenzen gegeneinander derart phasenverschoben sind, daß zu einem gegebenen Zeitpunkt die von den m Ausgängen gelieferten Signale jeweils dem Modulationsniveau von m aufeinanderfolgenden Rechtecken entsprechen, wobei eine zweite Selektionsvorrichtung (30, 40) drei Sequenzen von Binärsignalen $\sigma_{-1}$, $\sigma_0$, $\sigma_1$, die von drei aufeinanderfolgenden Schieberegistern einer selben Gruppe, die drei aufeinanderfolgenden Rechtecken der zu untersuchenden Linie entsprechen, geliefert werden, und eine Sequenz $\tau_0$ von mit $\sigma_0$ synchronen Binärsignalen einer Gruppe, die der nächsten Linie entspricht, auswählt.

9. Gerät nach den Ansprüchen 3 und 8, dadurch gekennzeichnet, daß die Vergleichervorrichtung (41—46) die Binärsignalsequenzen $s_{-1}$, $s_0$, $s_1$, $\sigma_{-1}$, $\sigma_0$, $\sigma_1$, $\tau_0$ empfängt, die Vergleiche $s_0$ mit $\sigma_{-1}$, $\sigma_0$, $\sigma_1$, $\tau_0$ und von $\sigma_0$ mit $s_{-1}$, $s_1$ durchführt, für jede Linie in Abhängigkeit von den Vergleichsergebnissen eine der folgenden Informationen liefert:

— Identität der zu untersuchenden Linie der zu überprüfenden Zeichnung mit der zu untersuchenden Linie des zu überprüfenden Motivs;

— X-Verschiebung einer Linie zwischen der Zeichnung und dem Motiv;

— Y-Verschiebung um ein Rechteck zwischen der Zeichnung und dem Motiv; und zu den zwei Selektionsvorrichtungen Selektionssignale liefert, die es ermöglichen, bei der nächsten Linie die eventuell festgestellte Verschiebung zu berücksichtigen.

10. Gerät nach Anspruch 9, dadurch gekennzeichnet, daß m = n = 9 und p = 4, um am Ende Überprüfung in jeder der beiden Richtungen X und Y ein Maximum von drei Verschiebungen des Motivs gegenüber der Zeichnung in derselben Richtung festzustellen.

11. Gerät nach einem der Ansprüche 1 bis 10, dadurch gekennzeichnet, daß das Analysebündel (19) ein Lichtbündel ist.

Fig.1

I II III

22

L

X

D D D

7

Y

**FI\q. 2a**

u

N×u

**FI\q. 2b**

200 7

221

100

222

X

H

D D

Y

**FI\q. 3**

B

A C D

E F

G

J

**FI\q. 4**

2

Fiq.5

$H$

$S$

$R_9$ → $S_9$

$R_8$ → $S_8$

$R_1$ → $S_1$

12 24

Fiq.8

$C_i^{\not{j}}$

$P_i^{\not{j}}$  $B_i^{\not{j}}$  $H_i$  $H$

$A_i^{j}$

$\Sigma$  $\Sigma_i^{\not{j}}$  $E_{\not{j}}$

Fiq.7

$\Sigma$

$E_{\not{j}}$

$T_{\not{j}}$

$C_1^{\not{j}}$  $C_2^{\not{j}}$  $C_9^{\not{j}}$

$H$

$H_1$  $\Sigma_1^{\not{j}}$  $H_2$  $\Sigma_2^{\not{j}}$  $H_9$  $\Sigma_9^{\not{j}}$

Fig.6

Fig. 9

Fig. 10

$$\boxed{\mathsf{F}\,\mathsf{IG}}.\mathbf{11}$$

**Fig.12**

Fig. 13

FIG. 14

FIG. 15